# EUROPÄISCHE PATENTSCHRIFT

(11) **EP 4 073 489 B1**
(45) Veröffentlichungstag und Bekanntmachung des Hinweises auf die Patenterteilung: **02.08.2023**
(21) Anmeldenummer: 21708209.8
(22) Anmeldetag: 25.02.2021
(51) Int. Cl.: G01N 1/22, E21D 9/06

(54) **TUNNELBOHRMASCHINE MIT EINER VORRICHTUNG ZUM ERFASSEN EINES GEHALTS AN KRITISCHEM GAS IN EINEM HOHLRAUM**
TUNNEL BORING MACHINE HAVING A DEVICE FOR DETECTING A CONTENT OF CRITICAL GAS IN A CAVITY
TUNNELIER COMPORTANT UN DISPOSITIF DE DÉTECTION D'UNE TENEUR EN GAZ CRITIQUE DANS UNE CAVITÉ

(30) Priorität: 28.02.2020 DE 102020105345
(43) Veröffentlichungstag der Anmeldung: 19.10.2022
(73) Patentinhaber: HERRENKNECHT AKTIENGESELLSCHAFT, 77963 Schwanau (DE)
(72) Erfinder: BRANDT, Jens, 79189 Bad Krozingen (DE); MÜNCHBACH, Markus, 79276 Reute (DE); FEISST, Albert, 77855 Achern-Önsbach (DE)
(74) Vertreter: RACKETTE Patentanwälte PartG mbB
(86) Internationale Anmeldenummer: PCT/EP2021/054714
(87) Internationale Veröffentlichungsnummer: WO 2021/170733

(56) Entgegenhaltungen:
- WO-A1-2019/143362
- CN-A- 110 125 129
- CN-A- 110 792 447
- DE-B- 1 049 810
- JP-A- 2004 300 721
- US-A1- 2018 171 786

## Beschreibung

Die Erfindung betrifft eine Tunnelbohrmaschine gemäß dem Oberbegriff des Anspruchs 1.

Eine derartige Tunnelbohrmaschine ist aus JP 2678563 B2 bekannt. Die gattungsgemäße Tunnelbohrmaschine verfügt über eine Vorrichtung mit einer Entnahmeleitung, die mit einem rückseitig eines Schneidrads liegenden Hohlraum fluiddynamisch in Verbindung steht. Auf der dem Hohlraum gegenüberliegenden Seite ist die Entnahmeleitung an ein Separationsmodul angeschlossen, mit dem ein zu erfassendes Gas aus einem Fluid abtrennbar ist. Das abgetrennte Gas ist einer dem Separationsmodul nachgeordneten Gasanalyseeinheit einspeisbar, über die Warnmeldungen, beispielsweise bei kritischen Gasverhältnissen ein Alarm, auslösbar sind.

Eine weitere Tunnelbohrmaschine mit einer Vorrichtung zum Erfassen des Gehalts an kritischem Gas ist aus JP 2004-300721 A bekannt. Diese vorbekannte Vorrichtung verfügt über ein Separationsmodul zum Abtrennen des zu erfassenden Gases aus einem einer Abfördereinheit entnommenen Fluid und über ein dem Separationsmodul nachgeordnetes Dosiermodul zum kontrollierten Beaufschlagen einer Gasanalyseeinheit mit abgetrenntem Gas. Bei der vorbekannten Vorrichtung erfolgt das Abtrennen eines zu erfassenden Gases durch Wechsel der Druckverhältnisse in einem Gas-Flüssigkeit-Gemisch mit Festkörperbestandteilen. Zum Erfassen eines Gehalts an kritischem, insbesondere explosivem Gas wie beispielsweise Methan ist ein Überführen eines aus diesem Gemisch ausgetretenen Anteils an Gas in eine Gasanalyseeinheit vorgesehen.

Aus US 2018/0171786 A1 und aus WO 2019/143362 A1 sind Vorrichtungen zum Analysieren eines aus einem Bohrloch stammenden Fluid extrahierten Gases bekannt, wobei hier ein Separationsmodul zum Abtrennen des zu erfassenden Gases aus dem Fluid und ein dem Separationsmodul nachgeordnetes Dosiermodul zum kontrollierten Beaufschlagen einer Gasanalyseeinheit mit abgetrenntem Gas, ein Druckminderer und ein Durchflussregulierventil vorhanden sind.

Der Erfindung liegt die Aufgabe zugrunde, eine Tunnelbohrmaschine der eingangs genannten Art anzugeben, die sich auch unter rauen, unter Umständen auch schnell und stark wechselnden Vortriebsbedingungen durch ein Erfassen eines Gehalts an kritischem Gas in einem unter verhältnismäßig hohen Druck stehenden, aber gegebenenfalls auch Druckschwankungen wie insbesondere bei einem starken Druckabfall unterworfenen, rückseitig eines Schneidrads liegenden Hohlraum mit einer zumindest für eine Gefahrenmeldung ausreichenden Genauigkeit auszeichnet.

Diese Aufgabe wird bei einer Tunnelbohrmaschine der eingangs genannten Art mit den Merkmalen des Anspruchs 1 gelöst.

Dadurch, dass bei der Tunnelbohrmaschine gemäß der Erfindung das Dosiermodul einen Druckminderer und ein dem Druckminderer nachgeordnetes Durchflussregulierventil aufweist und dass eine dem Druckminderer nachgeschaltete Doppelmembranpumpe vorhanden ist, lassen sich hohe Drücke kontrolliert herabsetzen, aber auch die für ein hinreichend verlässliches Erfassen eines Gehalts an einem kritischen Gas wichtige Durchflussrate zum Beaufschlagen einer Gasanalyseeinheit mit abgetrenntem Gas bei Druckabfall ausreichend genau einstellen sowie aufrechterhalten.

Weitere zweckmäßige Ausgestaltungen der Erfindung sind Gegenstand der abhängigen Ansprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnung.

Es zeigen:
- Fig. 1: in einer stark schematisierten Seitenansicht ein Ausführungsbeispiel einer Tunnelbohrmaschine gemäß der Erfindung mit einem Ausführungsbeispiel einer Vorrichtung gemäß der Erfindung,
- Fig. 2: in einer perspektivischen Ansicht das Ausführungsbeispiel einer Vorrichtung gemäß der Erfindung gemäß Fig. 1 mit Blick auf eine während des Betriebs für einen Bediener zugängliche Vorderseite sowie eine Gasanalyseeinheit,
- Fig. 3: in einer perspektivischen Ansicht das Ausführungsbeispiel gemäß Fig. 2 mit Blick auf die der Vorderseite abgewandten Rückseite und
- Fig. 4: in einer perspektivischen Ansicht ein weiteres Ausführungsbeispiel einer Vorrichtung gemäß der Erfindung mit Blick auf eine Rückseite entsprechend der Darstellung gemäß Fig. 3.

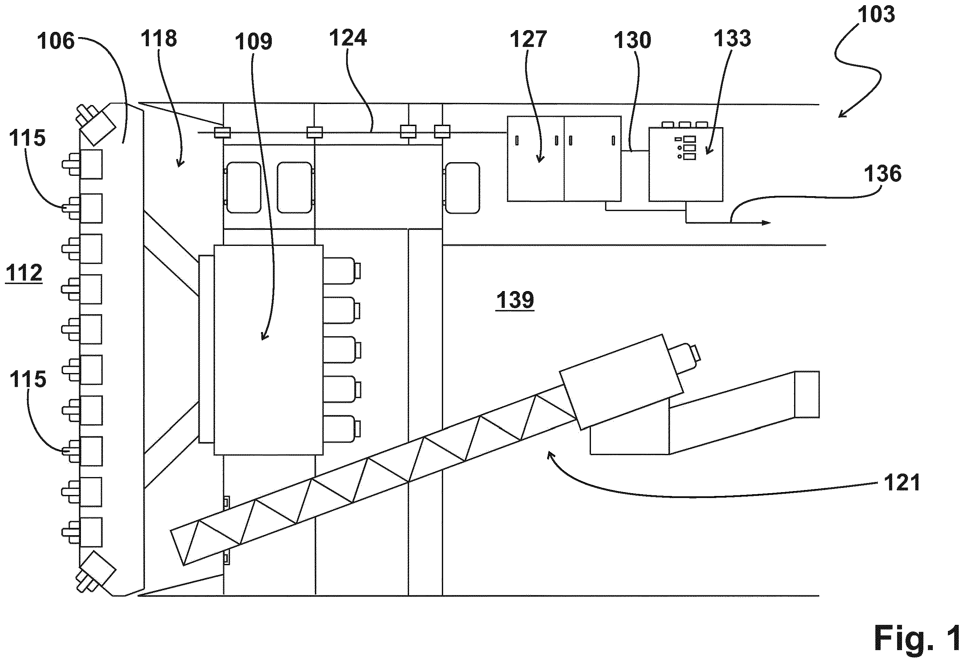

Fig. 1 zeigt in einer stark schematisierten Seitenansicht ein Ausführungsbeispiel einer Tunnelbohrmaschine 103 gemäß der Erfindung. Die Tunnelbohrmaschine 103 verfügt an einer in Vortriebsrichtung vorderen Stirnseite über ein Schneidrad 106, das mittels einer Antriebseinheit 109 drehbar und zum Abbau von Material an einer Ortsbrust 112 mit an die anstehende Geologie angepassten Abbauwerkzeugen 115 ausgestattet ist.

Auf der der Ortsbrust 112 abgewandten Seite des Schneidrads 106 ist eine Abbaukammer 118 als Hohlraum vorhanden, die insbesondere bei einem mit Druckunterstützung arbeitenden Abbauverfahren unter einem Druck von mehreren 1.000 Hektopascal (hPa) stehen kann. In die Abbaukammer 118 eingefördertes, von der Ortsbrust 112 abgebautes Material ist über eine Abfördereinheit 121, die beispielsweise mit einem Schneckenförderer ausgestattet ist, abförderbar.

Bei dem Ausführungsbeispiel gemäß der Erfindung mündet eine Entnahmeleitung 124 mit einem Ende in die gegen einen Durchlass für die Entnahmeleitung 124 abgedichtete Abbaukammer 118 in deren oberen, überwiegend flüssigkeits- und feststofffreien Bereich. Die Entnahmeleitung 124 ist mit ihrem der Abbaukammer 118 abgewandten Ende an eine Fluidaufbereitungseinheit 127 angeschlossen. Mit der Entnahmeleitung 124 ist somit das im Entnahmebereich in der Abbaukammer 118 vorliegende Fluid, das aufgrund der harschen Abbaubedingungen neben gasförmigen Bestandteilen auch flüssige sowie feste Bestandteile aufweist, der Fluidaufbereitungseinheit 127 zuführbar. Die Fluidaufbereitungseinheit 127 steht über eine Messgasübergabeleitung 130 mit einer Gasanalyseeinheit 133 in Verbindung. Sowohl die Fluidaufbereitungseinheit 127 als auch die Gasanalyseeinheit 133 sind an eine Ablassleitung 136 angeschlossen, mit der aus der Abbaukammer 118 über die Entnahmeleitung 124 entnommenes Fluid in seinen einzelnen Komponenten aus einem rückseitig der Ortsbrust 112 liegenden Tunnelraum 139 abführbar ist.

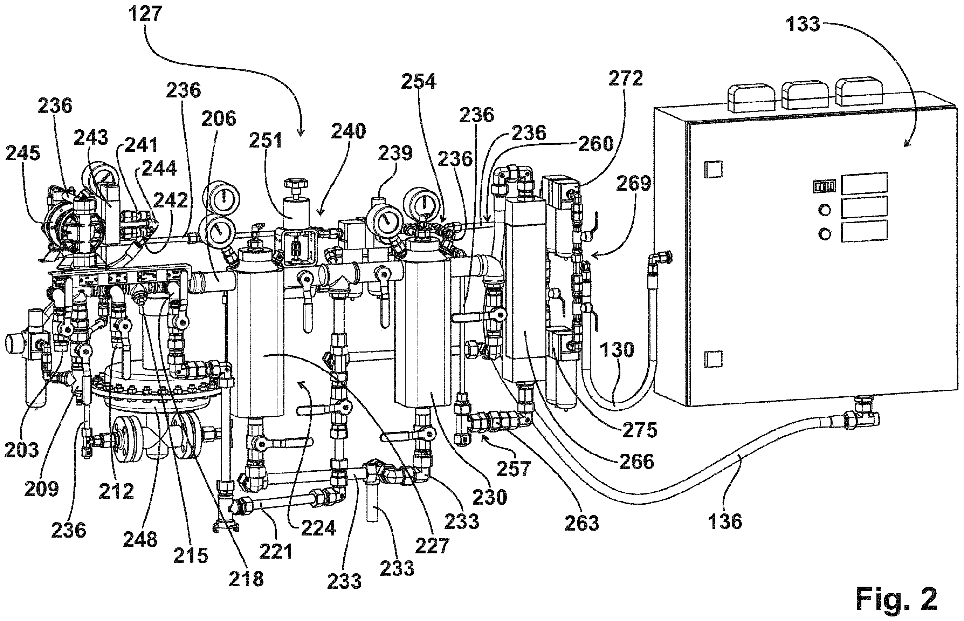

Fig. 2 zeigt in einer perspektivischen Ansicht mit Blick auf die einem Bediener im Normalbetrieb zugängliche Vorderseite den Aufbau der Fluidaufbereitungseinheit 127 eines Ausführungsbeispiels einer Vorrichtung gemäß der Erfindung, die typischerweise bei einer beispielhaft anhand Fig. 1 erläuterten Tunnelbohrmaschine 103 zum Einsatz kommt. Die Fluidaufbereitungseinheit 127 gemäß Fig. 2 ist eingangsseitig mit einem Entnahmeleitungsanschluss 203 ausgebildet, an den die Fig. 1 erläuterte, in Fig. 2 aus Gründen der Übersichtlichkeit nicht dargestellte Entnahmeleitung 124 druckdicht anschließbar ist. Der Entnahmeleitungsanschluss 203 steht mit einem Eingangsabschnitt einer Fluidmischungsleitungsanordnung 206 in Verbindung, an den weiterhin ein Luftanschluss 209, ein Testgasanschluss 212, ein Wartungsanschluss 215 und ein Wasseranschluss 218 angebracht sind. An den Wasseranschluss 218 ist eine Wasserleitungsanordnung 221 angeschlossen, mit der der Fluidmischungsleitungsanordnung 206 bedarfsweise Wasser zuführbar ist.

In die Fluidmischungsleitungsanordnung 206 ist in Strömungsrichtung eines über den Entnahmeleitungsanschluss 203 eingespeisten Fluids dem Entnahmeleitungsanschluss 203 sowie den weiteren Anschlüssen 209, 212, 215, 218 nachgeordnet ein Separationsmodul 224 mit bei diesem Ausführungsbeispiel zwei in Reihe geschalteten Separatoren 227, 230 integriert. Mit den zweckmäßigerweise für eine aufeinanderfolgende Grob- sowie eine daran anschließende Feinseparation eingerichteten und mit der Wirkung der Schwerkraft arbeitenden Separatoren 227, 230 sind aus dem aus der Abbaukammer 118 stammenden Fluid mitgeführte feste Bestandteile wie kleinere Steinchen, Sand und/oder Schlammmaterial sowie flüssige Bestandteile entfernbar, so dass in Strömungsrichtung des Fluids ausgangsseitig des Separationsmoduls 224 im Wesentlichen nur noch gasförmige Bestandteile enthalten sind. Die Separatoren 227, 230 sind im Bodenbereich an eine Abführleitungsanordnung 233 angeschlossen, mit der, wie in Fig. 2 dargestellt, zweckmäßigerweise über Verschlusshähne bedarfsweise gesteuert in den Separatoren 227, 230 angefallenes flüssiges und festes Material abführbar ist.

Nach Durchtritt durch das Separationsmodul 224 mit einem im Wesentlichen vollständigen Abtrennen der festen und flüssigen Bestandteile tritt das dann im Wesentlichen nur noch aus gasförmigen Bestandteilen bestehende Fluid in eine Gasleitungsanordnung 236 ein, in die ein Druckminderer 239 eines Dosiermoduls 240 integriert ist. Mit dem Druckminderer 239 ist der Eingangsdruck in der Gasleitungsanordnung 236 auf einen Ausgangsdruck von typischerweise etwa 1.000 hPa bis etwa 2.000 hPa mit einer entsprechenden Reduzierung des Volumenstroms herabsetzbar. In die Gasleitungsanordnung 236 ist weiterhin eine gegen abrasive Bestandteile in dem Fluid wie Sandkörner widerstandsfähige, mit einem ersten Drosselventil 241 sowie mit einem zweiten Drosselventil 242 verbundene und mittels eines Magnetsteuerschalters 243 mit unter Druck stehender Steuerluft aus einer Steuerluftleitung 244 beaufschlagbare Doppelmembranpumpe 245 integriert, mit der bei Bedarf der Druck des Fluids in Strömungsrichtung nach der Doppelmembranpumpe 245 auf einen bestimmten Überdruck erhöhbar ist.

Die Doppelmembranpumpe 245 verfügt über zwei miteinander zwangsgekoppelte Membrane, die über die Steuerluftleitung 244 von dem beispielsweise als 3/2-Steuerungsventil ausgebildeten Magnetsteuerschalter 243 über eine von einem in Fig. 2 nicht dargestellten Spannungsimpulsgenerator bereitgestellte impulsartige Spannung mit Aktivierung des Magnetsteuerschalters 243 oberhalb eines bestimmten Spannungssignalpegels sowie über eine Rückstellfeder nach Spannungsabfall unter den Spannungssignalpegel gesteuert mit der unter Druck stehenden Steuerluft derart alternierend ansteuerbar sind, dass bei einer ausreichend hohen Taktfrequenz sowie einem angepassten Druck in der Steuerluftleitung 244 eine ausreichend hohe Hubleistung bereitgestellt ist. Dadurch entfallen im Mittel weniger Zeitanteile auf den Niedrigdruck- beziehungsweise Niedrigvolumenstrombereich der Membrane nach Erreichen der Hubendlage sowie zur Rücksetzung.

Zum Glätten von verbleibenden Druckschwankungen insbesondere bei atmosphärischen Bedingungen in der Abbaukammer 118, das heißt ohne eine Selbstförderung des Fluids, sind die Öffnungsgrade der Drosselventile 241, 242 auf einen verhältnismäßig geringen Wert eingestellt, so dass die zur Entlastung entweichende Brauchluft der Membrane nur stark verzögert in die Umgebung entweicht. Dadurch geht jede Membran bei Rückstellung vor Erreichen der Ausgangslage wieder in den nächsten Hub über, und die gegenüberliegende Membran hat zwischenzeitlich die Hubarbeit im Wesentlichen nahtlos übernommen.

In Strömungsrichtung des Fluids nach der Doppelmembranpumpe 245 ist in die Gasleitungsanordnung 236 zunächst ein Druckstabilisator 248 in Gestalt eines Ausgleichsgefäßes mit einer Membran zum Stabilisieren des Drucks in der Gasleitungsanordnung 236 und nachfolgend ein Durchflussregulierventil 251 des Dosiermoduls 240 integriert, das zum feinen Einstellen einer Durchflussrate zweckmäßigerweise als Nadelventil ausgebildet ist. In Strömungsrichtung des Fluids nach dem Durchflussregulierventil 251 liegt eine Y-Verzweigung 254, die die Gasleitungsanordnung 236 in einen Hauptarm 257 mit einer verhältnismäßig großen Durchflussrate und in einen Nebenarm 260 mit einer gegenüber der Durchflussrate in dem Hauptarm 257 niedrigeren Durchflussrate aufteilt.

Das Anordnen des Durchflussregulierventils 251 in Strömungsrichtung des gasförmigen Fluids vor der Y-Verzweigung 254 hat den Vorteil, dass unter Berücksichtigung der fluiddynamischen Eigenschaften von in Strömungsrichtung des Fluids nachfolgenden Komponenten der gesamte Volumenstrom in der Gasleitungsanordnung 236 gezielt beeinflussbar ist. Fällt beispielsweise aus betrieblichen Gründen die Ablassleitung 136 verhältnismäßig lang aus, so resultieren daraus weitere Druckverluste, die entsprechend mit einer Reduzierung des Volumenstroms einhergehen. Mit Hilfe des Durchflussregulierventils 251 lässt sich in diesem Fall der gesamte Volumenstrom auf einen für eine verhältnismäßig genaue Messung durch die Gasanalyseeinheit 133 passenden Wert vordosieren.

In den Hauptarm 257 ist in Strömungsrichtung des Fluids nach einem aus Sicherheitsgründen vorgesehenen passiven Rückschlagventil 263 ein Volumenstrommessmodul 266 integriert, mit der der durch den Hauptarm 257 fließende Volumenstrom, der in einem festen Verhältnis zu dem in dem Nebenarm 260 fließenden Volumenstrom steht, an gasförmigen Fluid messbar ist. Ausgangsseitig des Volumenstrommessmoduls 266 ist die in Fig. 1 erläuterte Ablassleitung 136 angeschlossen.

In den Nebenarm 260 wiederum ist ein Nebenarmfiltermodul 269 mit zwei Nebenarmfiltern 272, 275, die aus Redundanzgründen parallel geschaltet sind, integriert, um aus dem in dem Nebenarm 260 der Gasleitungsanordnung 236 durchströmendes Fluid vor Eintritt in die Messgasübergabeleitung 130 zum Vermeiden von Beschädigungen der in der Regel verhältnismäßig empfindlichen Gasanalyseeinheit 133 von Restverschmutzungen zu reinigen.

Mit der Gasanalyseeinheit 133 ist somit gasförmiges, gereinigtes und nur relativ geringen Druckschwankungen unterworfenes Fluid mit einem verhältnismäßig konstanten Volumenstrom einspeisbar. Mit der Gasanalyseeinheit 133 ist die Zusammensetzung des gasförmigen Fluids in seinen gasförmigen Bestandteilen hinsichtlich kritischer, insbesondere explosiver Gase wie Methan erfassbar. Hierfür verfügt die Gasanalyseeinheit 133 zweckmäßigerweise über einen sehr genauen Volumenstrommesser mit daran gekoppeltem Mengeneinstellrad für eine sehr präzise Dosierung des einem Gassensor der Gasanalyseeinheit 133 zugeführten gasförmigen Fluids.

Die für einen Bediener im üblichen Betrieb von der Vorderseite her aus zugänglichen Anschlüsse 203, 209, 212, 215, 218 sind über jeweils einen Verschlusshahn zu verschließen und zu öffnen.

Dadurch lässt sich insbesondere bei einem Verschließen des Entnahmeleitungsanschlusses 203 über den Luftanschluss 209 unter Druck stehende Luft sowie über den Wasseranschluss 218 mit der angeschlossenen Wasserleitungsanordnung 221 Wasser zum Spülen insbesondere der Fluidmischungsleitungsanordnung 206 mit Durchfluss in beiden Richtungen durchführen. Über den Testgasanschluss 212 lässt sich bei Öffnen des entsprechenden Verschlusshahns und Verschließen der anderen Verschlusshähne ein Testgas zum Prüfen der Funktionsfähigkeit der Fluidaufbereitungseinheit 127 und insbesondere der Gasanalyseeinheit 133 durchleiten.

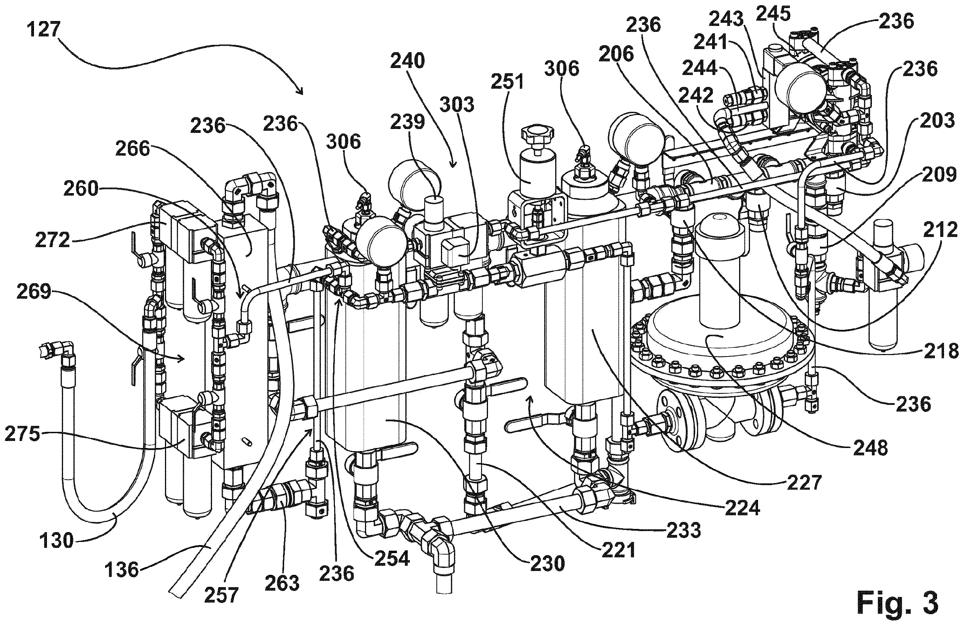

Fig. 3 zeigt in einer perspektivischen Ansicht das Ausführungsbeispiel einer Fluidaufbereitungseinheit 127 gemäß Fig. 2 mit Blick auf die der Vorderseite abgewandte Rückseite. Aus Fig. 3 ist der in der Darstellung gemäß Fig. 2 nicht sichtbare Teil der Gasleitungsanordnung 236 mit den in sie integrierten Komponenten sichtbar. Insbesondere lässt sich der Darstellung gemäß Fig. 3 entnehmen, dass die Gasleitungsanordnung 236 mit einem Abschaltventil 303 ausgestattet ist, mit dem in Strömungsrichtung des in der Gasleitungsanordnung 236 strömenden gasförmigen Fluids vorderseitigen Bereich beispielsweise in Fällen wie einem kritischen Füllstand in dem Separationsmodul 224 eine Sperrung des in Strömungsrichtung rückseitigen Bereichs erfolgen kann. Des Weiteren lässt sich aus der Darstellung gemäß Fig. 3 deutlich die Anordnung der Y-Verzweigung 254 in Gestalt eines T-Stücks mit dem Hals des T eingangsseitig des Nebenarms 260 erkennen. Überdies lässt sich Fig. 3 entnehmen, dass die Separatoren 227, 230 mit jeweils einem Füllstandssensor 306 ausgestattet sind, mittels denen ein Warnsignal dahingehend erzeugbar ist, dass bei einem maximalen Füllstand bei Eingriff eines Bedieners der Inhalt der Separatoren 227, 230 über die Abführleitungsanordnung 233 abführbar ist.

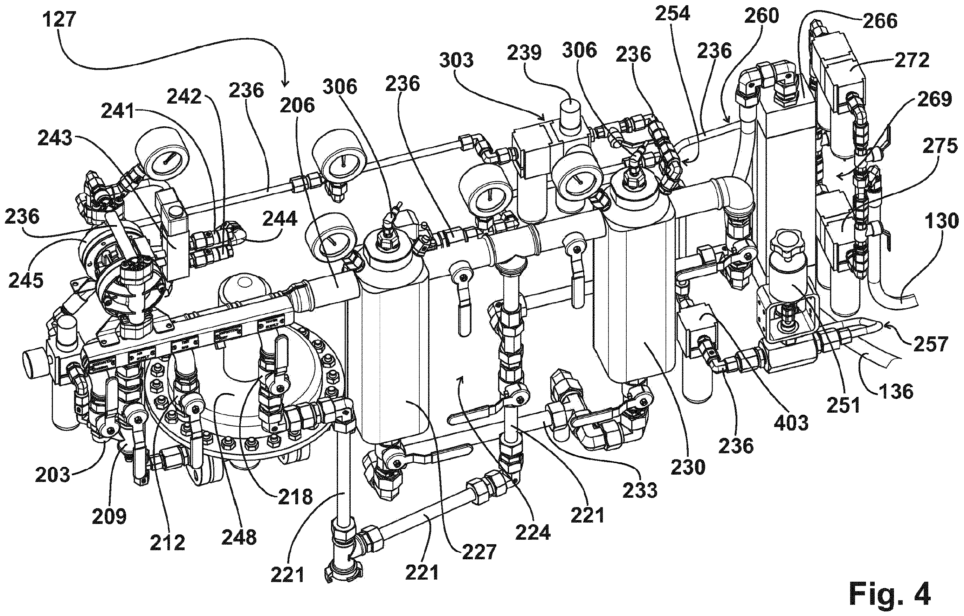

Fig. 4 zeigt in einer perspektivischen Ansicht ein weiteres Ausführungsbeispiel einer Fluidaufbereitungseinheit 127 mit Blick auf eine für einen Bediener im Betrieb zugänglichen Vorderseite entsprechend der Darstellung gemäß Fig. 2, wobei sich bei dem anhand von Fig. 2 sowie Fig. 3 erläuterten Ausführungsbeispiel einer Fluidaufbereitungseinheit 127 und bei dem anhand Fig. 4 erläuterten Ausführungsbeispiel einer Fluidaufbereitungseinheit 127 einander entsprechende Komponenten mit den gleichen Bezugszeichen versehen und zum Vermeiden von Wiederholungen im Weiteren nicht näher erläutert sind.

Das Ausführungsbeispiel gemäß Fig. 4 unterscheidet sich von dem Ausführungsbeispiel gemäß Fig. 2 sowie Fig. 3 im Wesentlichen dadurch, dass das Durchflussregulierventil 251 in dem Hauptarm 257 in Strömungsrichtung des Fluids vor dem Volumenstrommessmodul 266 mit einem insbesondere bei einer tiefen Anordnung im unteren Bereich der Fluidaufbereitungseinheit 127 zum Schutz vorgeschalteten Hauptstromfiltermodul 403 integriert ist. Ein Rückschlagventil 263 ist bei dem Ausführungsbeispiel gemäß Fig. 4 nicht vorgesehen. Das Ausführungsbeispiel einer Fluidaufbereitungseinheit 127 gemäß Fig. 4 zeichnet sich dadurch aus, dass über die Einstellung der Durchflussrate in dem Hauptarm 257 die Durchflussrate in dem Nebenarm 260 verhältnismäßig genau einstellbar ist, was für die Messgenauigkeit der Gasanalyseeinheit 133 förderlich ist.

Dem Ausführungsbeispiel gemäß Fig. 2 sowie Fig. 3 und dem Ausführungsbeispiel gemäß Fig. 4 ist gemeinsam, dass die Druckanpassung, Druckstabilisierung und Durchflussratenanpassung für eine ordnungsgemäße Funktionsweise der Gasanalyseeinheit 133 über die Abfolge in Strömungsrichtung des Fluids von Druckminderer 239, Doppelmembranpumpe 245, Druckstabilisator 248 und Durchflussregulierventil 251 mit anschließender Aufteilung an der Y-Verzweigung 254 in einen Hauptarm 257 mit einer größeren Durchflussrate sowie in einen Nebenarm 260 mit einer geringeren Durchflussrate in Richtung der Gasanalyseeinheit 133 erfolgt. Dadurch lässt sich der Gehalt an kritischem Gas in dem gasförmigen Fluid auch unter stark wechselnden Umgebungsbedingungen in der Abbaukammer 118 weitgehend verzögerungsfrei wenigstens so genau bestimmen, dass beispielsweise das Vorliegen an explosivem Methan in einer sicherheitsrelevanten Konzentration zuverlässig und verhältnismäßig schnell erfassbar ist.

## Patentansprüche

1. Tunnelbohrmaschine mit einer Vorrichtung zum Erfassen eines Gehalts an kritischem Gas in einem rückseitig eines Schneidrads (106) liegenden Hohlraum (118) mit einer Entnahmeleitung (124), die sich zwischen einer Abbaukammer (118) als Hohlraum und der Vorrichtung erstreckt, mit einem Separationsmodul (224) zum Abtrennen des zu erfassenden Gases aus einem Fluid und mit einer dem Separationsmodul (224) nachgeordneten Gasanalyseeinheit (133),
**dadurch gekennzeichnet, dass** dem Separationsmodul (224) ein Dosiermodul (240) zum kontrollierten Beaufschlagen der Gasanalyseeinheit (133) mit abgetrenntem Gas nachgeordnet ist, dass das Dosiermodul (240) einen Druckminderer (239) sowie ein dem Druckminderer (239) nachgeordnetes Durchflussregulierventil (251) aufweist und dass eine Doppelmembranpumpe (245) vorhanden ist, die dem Druckminderer (239) nachgeschaltet ist.

2. Tunnelbohrmaschine nach Anspruch 1, **dadurch gekennzeichnet, dass** zwei Membrane der Doppelmembranpumpe (245) miteinander zwangsgekoppelt sind und dass die Membrane über eine Steuerluftleitung (244) von einem Magnetsteuerschalter (243) mit unter Druck stehender Steuerluft alternierend ansteuerbar sind.

3. Tunnelbohrmaschine nach Anspruch 2, **dadurch gekennzeichnet, dass** die Doppelmembranpumpe (245) mit einem ersten Drosselventil (241) und mit einem zweiten Drosselventil (242) verbunden ist, deren Öffnungsgrade derart auf einen verhältnismäßig geringen Wert einstellbar sind, dass zur Entlastung entweichende Brauchluft der Membrane nur stark verzögert in eine Umgebung entweicht.

4. Tunnelbohrmaschine nach einem der Ansprüche 1 bis 3, **dadurch gekennzeichnet, dass** ein Druckstabilisator (248) vorhanden ist, der zwischen der Doppelmembranpumpe (245) und dem Durchflussregulierventil (251) angeordnet ist.

5. Tunnelbohrmaschine nach einem der Ansprüche 1 bis 4, **dadurch gekennzeichnet, dass** das Durchflussregulierventil (251) ein Nadelventil ist.

6. Tunnelbohrmaschine nach einem der Ansprüche 1 bis 5, **dadurch gekennzeichnet, dass** ein Volumenstrommessmodul (266) vorhanden ist, das dem Durchflussregulierventil (251) nachgeordnet ist.

7. Tunnelbohrmaschine nach einem der Ansprüche 1 bis 6, **dadurch gekennzeichnet, dass** nach dem Druckminderer (239) eine bezüglich der aufgeteilten Volumenströme asymmetrische Y-Verzweigung (254) mit einem nachgeordneten Hauptarm (257) sowie mit einem nachgeordneten Nebenarm (260) vorhanden ist und dass das Volumenstrommessmodul (266) in dem Hauptarm (257) nach der Y-Verzweigung (254) angeordnet ist.

8. Tunnelbohrmaschine nach Anspruch 7, **dadurch gekennzeichnet, dass** in dem Nebenarm (260) ein Nebenarmfiltermodul (269) angeordnet ist.

9. Tunnelbohrmaschine nach Anspruch 7 oder Anspruch 8, **dadurch gekennzeichnet, dass** das Durchflussregulierventil (251) zwischen dem Druckminderer (239) und der Y-Verzweigung (254) angeordnet ist.

10. Tunnelbohrmaschine nach Anspruch 7 oder Anspruch 8, **dadurch gekennzeichnet, dass** das Durchflussregulierventil (251) nach der Y-Verzweigung (254) in dem Hauptarm (257) angeordnet ist.

11. Tunnelbohrmaschine nach Anspruch 10, **dadurch gekennzeichnet, dass** in dem Hauptarm (257) zwischen der Y-Verzweigung (254) und dem Durchflussregulierventil (251) ein Hauptstromfiltermodul (403) vorhanden ist.

12. Tunnelbohrmaschine nach einem der Ansprüche 7 bis 11, **dadurch gekennzeichnet, dass** eine Gasanalyseeinheit (133) vorhanden ist, die dem Nebenarm (260) nachgeordnet und zum Erfassen von explosivem Gas eingerichtet ist.

## Claims

1. Tunnel boring machine having a device for detecting a content of critical gas in a cavity (118) located at the rear side of a cutting wheel (106) comprising an extraction line (124) extending between an excavation chamber (118), as the cavity, and the device, a separation module (224) for separating the gas to be detected from a fluid, and a gas analysis unit (133) arranged downstream of the separation module (224),
**characterized in that** a dosing module (240) for controlled supply of separated gas to the gas analysis unit (133) is arranged downstream of the separation module (224), the dosing module (240) comprises a pressure reducer (239) and a flow control valve (251) arranged downstream of the pressure reducer (239) and a double diaphragm pump (245) is provided which is arranged downstream of the pressure reducer (239).

2. Tunnel boring machine according to Claim 1, **characterized in that** two diaphragms of the double diaphragm pump (245) are forcibly coupled to one other and the diaphragms can be alternately actuated using pressurized control air via a control air line (244) by a magnetic control switch (243).

3. Tunnel boring machine according to Claim 2, **characterized in that** the double diaphragm pump (245) is connected to a first throttle valve (241) and to a second throttle valve (242), the opening degrees of which can be set to a comparatively low value, in such a manner that used air escaping from the diaphragms for relief purposes only escapes into the environment with a significant delay.

4. Tunnel boring machine according to any one of Claims 1 to 3, **characterized in that** a pressure stabilizer (248) is provided which is arranged between the double diaphragm pump (245) and the flow control valve (251).

5. Tunnel boring machine according to any one of Claims 1 to 4, **characterized in that** the flow control valve (251) is a needle valve.

6. Tunnel boring machine according to any one of Claims 1 to 5, **characterized in that** a volume flow measuring module (266) is provided which is arranged downstream of the flow control valve (251).

7. Tunnel boring machine according to any one of Claims 1 to 6, **characterized in that** after the pressure reducer (239) an asymmetric Y-branch (254) with respect to the divided volume flows is provided, having a main arm (257) arranged downstream and a secondary arm (260) arranged downstream, and the volume flow measuring module (266) is arranged in the main arm (257) after the Y-branch (254).

8. Tunnel boring machine according to Claim 7, **characterized in that** a secondary arm filter module (269) is arranged in the secondary arm (260).

9. Tunnel boring machine according to Claim 7 or Claim 8, **characterized in that** the flow control valve (251) is arranged between the pressure reducer (239) and the Y-branch (254).

10. Tunnel boring machine according to Claim 7 or Claim 8, **characterized in that** the flow control valve (251) is arranged in the main arm (257) after the Y-branch (254).

11. Tunnel boring machine according to Claim 10, **characterized in that** a main flow filter module (403) is provided in the main arm (257) between the Y-branch (254) and the flow control valve (251).

12. Tunnel boring machine according to any one of Claims 7 to 11, **characterized in that** a gas analysis unit (133) is provided which is arranged downstream of the secondary arm (260) and is configured for detecting explosive gas.

## Revendications

1. Tunnelier avec un dispositif de détection d'une teneur en gaz critique dans une cavité (118) située à l'arrière d'une roue de coupe (106) avec une conduite de prélèvement (124) qui s'étend entre une chambre d'extraction (118) en tant que cavité et le dispositif, avec un module de séparation (224) pour séparer le gaz à détecter d'un fluide et avec une unité d'analyse de gaz (133) disposée en aval du module de séparation (224),
**caractérisé en ce qu'un** module de dosage (240) pour l'alimentation contrôlée de l'unité d'analyse de gaz (133) avec du gaz séparé est disposé en aval du module de séparation (224), **en ce que** le module de dosage (240) comprend un réducteur de pression (239) et une soupape de régulation de débit (251) disposée en aval du réducteur de pression (239) et **en ce qu'**il existe une pompe à double membrane (245) qui est disposée en aval du réducteur de pression (239).

2. Tunnelier selon la revendication 1, **caractérisé en ce que** deux membranes de la pompe à double membrane (245) sont couplées de manière forcée l'une à l'autre et **en ce que** les membranes peuvent être commandées en alternance par un commutateur de commande magnétique (243) avec de l'air de commande sous pression via une conduite d'air de commande (244).

3. Tunnelier selon la revendication 2, **caractérisé en ce que** la pompe à double membrane (245) est reliée à une première soupape d'étranglement (241) et à une deuxième soupape d'étranglement (242) dont les degrés d'ouverture peuvent être réglés à une valeur relativement faible de telle sorte que l'air confiné de la membrane qui s'échappe pour la décharge ne s'échappe dans un environnement que de manière fortement retardée.

4. Tunnelier selon l'une quelconque des revendications 1 à 3, **caractérisé en ce qu'**il comporte un stabilisateur de pression (248) disposé entre la pompe à double membrane (245) et la soupape de régulation de débit (251).

5. Tunnelier selon l'une quelconque des revendications 1 à 4, **caractérisé en ce que** la soupape de régulation de débit (251) est une soupape à pointeau.

6. Tunnelier selon l'une quelconque des revendications 1 à 5, **caractérisé en ce qu'**il comporte un module de mesure de débit (266) placé en aval de la soupape de régulation de débit (251).

7. Tunnelier selon l'une quelconque des revendications 1 à 6, **caractérisé en ce qu'**après le réducteur de pression (239), il existe une ramification en Y (254) asymétrique par rapport aux débits volumétriques répartis, avec un bras principal (257) en aval ainsi qu'avec un bras secondaire (260) en aval, et **en ce que** le module de mesure de débit volumétrique (266) est disposé dans le bras principal (257) après la ramification en Y (254) .

8. Tunnelier selon la revendication 7, **caractérisé en ce qu'**un module de filtre de bras secondaire (269) est disposé dans le bras secondaire (260).

9. Tunnelier selon la revendication 7 ou la revendication 8, **caractérisé en ce que** la soupape de régulation de débit (251) est disposée entre le réducteur de pression (239) et la ramification en Y (254) .

10. Tunnelier selon la revendication 7 ou la revendication 8, **caractérisé en ce que** la soupape de régulation de débit (251) est disposée en aval de la ramification en Y (254) dans le bras principal (257).

11. Tunnelier selon la revendication 10, **caractérisé en ce qu'**un module de filtre à courant principal (403) est présent dans le bras principal (257) entre la ramification en Y (254) et la soupape de régulation de débit (251).

12. Tunnelier selon l'une quelconque des revendications 7 à 11, **caractérisé en ce qu'**une unité d'analyse de gaz (133) disposée en aval du bras secondaire (260) et agencée pour détecter un gaz explosif est prévue.
